# EUROPÄISCHE PATENTSCHRIFT

(11) **EP 1 360 022 B1**
(45) Veröffentlichungstag und Bekanntmachung des Hinweises auf die Patenterteilung: **12.03.2008**
(21) Anmeldenummer: 02706657.0
(22) Anmeldetag: 31.01.2002
(51) Int. Cl.: B21D 53/10, F16C 33/14

(54) **BUNDBUCHSE, VERFAHREN ZU IHRER HERSTELLUNG UND BIEGEWERKZEUG ZUR HERSTELLUNG VON BUNDEN AN EINER BUCHSE**
FLANGE SLEEVE, METHOD FOR THE PRODUCTION THEREOF AND BENDING TOOL FOR PRODUCING FLANGES ON A SLEEVE
DOUILLE A COLLET, SON PROCEDE DE PRODUCTION ET OUTIL DE CINTRAGE POUR REALISER DES COLLETS SUR UNE DOUILLE

(30) Priorität: 14.02.2001 DE 10107109
(43) Veröffentlichungstag der Anmeldung: 12.11.2003
(73) Patentinhaber: Federal-Mogul Wiesbaden GmbH & Co.KG, 65201 Wiesbaden (DE)
(72) Erfinder: KIRCHHOF, Klaus, 65527 Niedernhausen (DE); VALASIADIS, Konstantinos, 65201 Wiesbaden (DE)
(74) Vertreter: Fuchs
(86) Internationale Anmeldenummer: PCT/DE2002/000338
(87) Internationale Veröffentlichungsnummer: WO 2002/064283

(56) Entgegenhaltungen:
- DE-A- 2 049 184
- DE-A- 2 406 361
- DE-A- 19 524 757
- US-A- 4 048 703

## Beschreibung

Die Erfindung betrifft eine Bundbuchse für Gleitlager mit mindestens einem angeformten Bund gemäß dem Oberbegriff des Patentanspruchs 1, ein Verfahren zu ihrer Herstellung gemäß dem Oberbegriff des Patentanspruchs 9 und eine Umformvorrichtung gemäß dem Oberbegriff des Patentanspruchs 13.

Aus der DE-Os 20 49 184 ist ein Verfahren zur Herstellung einer Wälzlagerhülse bekannt. Die Wälzlagerhülse weist einen zylindrischen Teil auf, dessen Innendurchmesser die äußere Laufbahn für ein Radiallager mit zylindrischen Wälzkörpern darstellt. An ihrem einen Ende ist die Hülse mit einem radial nach außen gerichteten Flansch zur Anlage einer Laufscheibe für einen Axialkäfig mit einer Anzahl zylindrischer Wälzkörper versehen. Der zylindrische Teil der Wälzlagerhülse weist keinen Stoß auf. Hergestellt wird die Wälzlagerhülse mit Hilfe einer Umformvorrichtung, die ein Biegewerkzeug und eine Druckplatte aufweist, welche als Dorn mit einer Ringfläche ausgebildet ist.

Von diesen Wälzlagerhülsen sind Bundbuchsen für Gleitlager zu unterscheiden, die entweder einen Bund oder zwei Bunde aufweisen und die in den unterschiedlichsten Abmessungen mit Durchmessern vom Zentimeterbereich bis in den Dezimeterbereich bekannt sind. Die verwendeten Materialien richten sich nach dem Verwendungszweck, wobei das Buchsenmaterial ein- oder mehrschichtig aufgebaut sein kann. Bei den einschichtigen Buchsen spricht man von Vollmaterialbuchsen. Mehrschichtig aufgebaute Buchsen weisen in der Regel ein Trägermaterial und eine Gleitbeschichtung auf. Die Gleitschicht kann aus einer metallischen Legierung oder aus Kunststoff bestehen. Die Erfindung betrifft alle Bundbuchsen, unabhängig von ihren Abmessungen, dem Einsatzzweck und den verwendeten Materialien, mit der Einschränkung, daß die Bundbuchsen mindestens eine metallische Schicht aufweisen müssen.

Bei der Herstellung von Bundbuchsen geht man von Lagerhülsen oder Buchsen aus, deren Rand in einem weiteren Arbeitsschritt zum Bund umgebogen werden. Derzeit übliche Verfahren sind das Rollen von Buchsen, wobei ausgehend von einem flachen Bandabschnitt, der sogenannten Platine, eine Buchse oder Hülse gerollt wird.

Bei gerollten Lagerbuchsen ist es im allgemeinen erforderlich, daß die Stoßfuge bei eingebauter Buchse geschlossen ist, während die Stoßfuge bei nicht eingebauter Lagerbuchse meist nicht völlig geschlossen ist, da das Material entsprechend dem für die Herstellung der Buchse benutzten Verfahren mehr oder weniger auffedert (vgl. DIN 1494, Teil 1, Juni 1983, S. 1).

Herstellungsverfahren für gerollte Buchsen sind bekannt und werden beispielsweise in Dipl.-Ing. Hugo Kotthaus "Betriebstechnisches Taschenbuch", Band 2, 7. Auflage, Karl Hanser Verlag München, 1967, S. 212ff, beschrieben.

Um die offene Stoßfuge zu schließen, wurde in der DE-OS 23 17 564 vorgeschlagen, daß die Buchsen erwärmt und gleichzeitig an einer Durchmesservergrößerung infolge Wärmeausdehnung gehindert werden.

Sowohl mit diesem bekannten Verfahren als auch mit einem in der DE-PS 517530 beschriebenen Umformverfahren ist es möglich, die Stoßöffnung bei Buchsen zu schließen.

Wenn jedoch derart vorgefertigte Buchsen zu Bundbuchsen umgeformt werden, indem der Rand der Buchse umgebogen wird, öffnet sich die Stoßfuge wieder, wobei die Spaltbreite je nach Durchmesser und Bundbreite erhebliche Ausmaße annehmen kann.

Bundbuchsen mit Spaltöffnung können nur mit Spezialwerkzeugen, mit denen die Bundbuchse unter Aufwendung großer Kräfte zusammengedrückt wird, eingebaut werden, wobei sich die Bundbuchse unter Umständen auch verziehen kann, was wiederum zu Beschädigungen der Bundbuchse führt.

Kleinere Bundbuchsen, die in großer Stückzahl als Schüttgut in Kartons transportiert werden, können sich verhaken, wobei oft eine Kettenbildung mehrerer Bundbuchsen auftritt. Der Abnehmer muß vor dem Einbau der Bundbuchsen diese mühsam und meist von Hand vereinzeln. Es besteht daher seit langem der Wunsch nach Bundbuchsen mit geschlossener Stoßfuge.

Eine geschlossene Stoßfuge bei Bundbuchsen konnte bisher nur durch Anschweißen eines den Bund bildenden Rings an eine Buchse erreicht werden. Der Nachteil dieses Verfahrens besteht darin, daß das Anschweißen im Vergleich zum Umbiegen des Buchsenrandes teurer ist.

Es ist daher Aufgabe der Erfindung, eine Buchse mit geschlossener oder weitgehend geschlossener Stoßfuge zu schaffen, deren Herstellkosten nicht größer sind als die herkömmlichen durch Umbiegen erhaltenen Bundbuchsen.

Es ist ferner Aufgabe der Erfindung, ein geeignetes Verfahren und eine entsprechende Umformvorrichtung zur Verfügung zu stellen.

Die erfindungsgemäße Bundbuchse, die eine Stoßöffnung oder eine definiert eingestellte Stoßöffnung aufweist, ist dadurch gekennzeichnet, daß der Bund an mindestens zwei in Umfangsrichtung über den Bund verteilten Stellen wenigstens in der metallischen Schicht materialverdrängende Vertiefungen zur Streckung des Bundes in Umfangsrichtung aufweist.

Vorzugsweise sind die Vertiefungen als Einprägungen ausgestaltet.

Vorzugsweise befinden sich die Vertiefungen an der Innenfläche und/oder an der Außenfläche des Bundes.

In einer weiteren bevorzugten Ausführungsform erstrecken sich die Vertiefungen bis in den Außenrand des Bundes. Es hat sich nämlich gezeigt, daß die materialverdrängenden Vertiefungen dann am wirksamsten sind, je weiter außen - in radialer Richtung gesehen - die Vertiefungen eingebracht sind. Die Anzahl der Vertiefungen kann gegenüber der Anzahl von Vertiefungen, die sich nicht bis in den Außenrand des Bundes erstrecken, deutlich reduziert werden.

Vorzugsweise verbreitern sich die Vertiefungen in radialer Richtung von innen nach außen. Dadurch wird dort, wo der Umfang größer wird, auch eine größere Materialverdrängung herbeigeführt.

Vorzugsweise besitzen die Vertiefungen eine Halbkreis- oder Keilform.

Alternativ oder zusätzlich zur Verbreiterung der Vertiefungen kann auch eine von innen nach radial außen zunehmende Tiefe der Vertiefungen vorteilhaft sein, weil durch die damit verbundene Zunahme der Materialverdrängung dem radial nach außen wachsenden Umfang Rechnung getragen wird.

Vorzugsweise erstrecken sich die Vertiefungen in radialer Richtung über die gesamte Breite des Bundes.

Die Aufgabe wird verfahrensmäßig dadurch gelöst, daß an mindestens zwei in Umfangsrichtung über den Bund verteilten Stellen materialverdrängende Vertiefungen zur Streckung des Bundes in Umfangsrichtung wenigstens in der Metallschicht der Bundbuchse eingebracht werden.

Es hat sich überraschend gezeigt, daß die Materialverdrängung durch das Einbringen der Vertiefung den Bund in Umfangsrichtung derart streckt, daß die Stoßöffnung geschlossen wird.

Das Einbringen materialverdrängender Vertiefungen ist ein preiswertes Verfahren, insbesondere dann, wenn die Vertiefungen vorzugsweise durch Prägen erzeugt werden.

Die Vertiefungen können in die Innen- und/oder Außenfläche des Bundes eingebracht werden.

Wo die Vertiefungen eingebracht werden, hängt von dem Aufbau der Bundbuchse, des Materials und dem Anwendungszweck ab. Wenn es sich beispielsweise um Bundbuchsen für Dieselmotoren handelt, so besteht die Buchse in der Regel aus einem metallischen Trägerwerkstoff, auf dem wenigstens eine Gleitschicht aufgebracht ist. Um die Gleitschicht durch das Einbringen materialverdrängender Vertiefungen nicht zu beschädigen, werden die Vertiefungen vorzugsweise in die Innenfläche des Bundes eingebracht.

Wenn die Vertiefungen bei beschichteten Buchsen zusätzlich oder ausschließlich in die Außenfläche des Bundes eingebracht werden sollen, müssen die Vertiefungen bis in die metallische Trägerschicht reichen, weil anderenfalls keine ausreichende Materialverdrängung des die Auffederung bestimmenden Materials erzeugt wird.

Vorzugsweise werden die Vertiefungen beim Umbiegen des Buchsenrandes erzeugt. Die Integration in den Umbiegevorgang hat den Vorteil, daß kein zusätzlicher Verfahrensschritt notwendig ist, so daß sich die Herstellkosten gegenüber herkömmlichen Bundbuchsen nicht erhöhen. Wenn die materialverdrängenden Vertiefungen während des Umbiegens in den Bund eingebracht werden, kann sich die Stoßfuge erst gar nicht öffnen.

Über Größe, Anzahl, Form und Tiefe der Vertiefungen läßt sich die Stoßfuge kontrolliert schließen bzw. die Breite der Stoßfuge läßt sich somit je nach Einsatzzweck der Buchse gezielt einstellen.

Die erfindungsgemäße Umformvorrichtung ist dadurch gekennzeichnet, daß die Umformvorrichtung eine untere Druckplatte oder eine Schulter aufweist, an der das dem Bund gegenüberliegende andere stirnseitige Ende der Buchse in axialer Richtung anlegbar ist, und dass die die Anlagefläche für den Bund bildende Stirnfläche des Biegewerkzeugs und/oder die dem Bund zugewandte Fläche der Druckplatte an mindesten zwei über den Umfang verteilten Stellen Erhöhungen aufweisen, wobei die unprofilierten, glatt ausgebildeten Bereiche auf der Stirnfläche des Biegewerkzeugs oder auf der dem Bund zugewandten Fläche der Druckplatte gegenüberliegen, so dass bei Betätigung der Umformvorrichtung materialverdrängende Vertiefungen am Bund zur Streckung des Bundes in Umfangsrichtung ausgebildet werden.

Vorzugsweise sind die Erhöhungen in Umfangsrichtung äquidistant angeordnet.

Die Erhöhungen können eine kreisförmige, ovale oder keilförmige Struktur besitzen.

Es ist auch möglich, die Erhöhungen als sich in radialer Richtung erstreckende Stege auszubilden.

Die Erhöhungen können an die Stirnfläche angeformt sein oder durch austauschbare Bauteile gebildet werden, die in die Stirnfläche eingesetzt sind. Vorzugsweise sind gegenüber der Stirnfläche vorstehende Prägestempel in die Stirnfläche eingesetzt. Es ist dadurch möglich, das Biegewerkzeug variabel zu gestalten und auf diese Weise an unterschiedlich breite Bunde bei gleichem Durchmesser der Bundbuchse anzupassen.

Vorzugsweise sind die einsetzbaren Prägestempel Stifte, die in entsprechende Bohrungen in die Stirnfläche des Biegewerkzeugs eingesetzt werden.

Beispielhafte Ausführungsformen der Erfindung werden nachfolgend anhand der Zeichnungen näher erläutert.

Es zeigen:
- Fig. 1: eine herkömmliche Bundbuchse mit einem Bund gemäß dem Stand der Technik,
- Fig. 2: eine Draufsicht auf eine erfindungsgemäße Bundbuchse gemäß einer ersten Ausführungsform,
- Fig. 3: eine Draufsicht auf eine erfindungsgemäße Bundbuchse gemäß einer weiteren Ausführungsform,
- Fig. 4: eine Draufsicht auf eine erfindungsgemäße Bundbuchse gemäß einer dritten Ausführungsform,
- Fig. 5: einen Schnitt durch die in Fig. 4 gezeigte Bundbuchse längs der Linie V-V,
- Fig. 6: einen Schnitt durch eine Bundbuchse gemäß einer weiteren Ausführungform,
- Fig. 7: eine Umformvorrichtung im Vertikalschnitt und
- Fig. 8: eine Draufsicht auf ein Biegewerkzeug mit eingesetzter Bundbuchse.

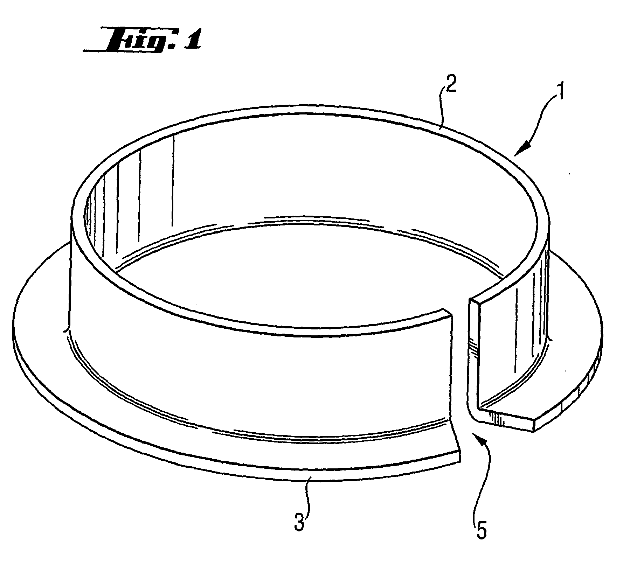

In der Fig. 1 ist eine herkömmliche Bundbuchse 1 dargestellt, die einen zylindrischen Buchsenkörper 2 und einen einzigen daran angeformten Bund 3 aufweist, der duch Umbiegen des Buchsenrandes erzeugt wurde. Bedingt durch den Herstellungsvorgang weist die Bundbuchse 1 eine beträchtliche Stoß öffnung 5 auf.

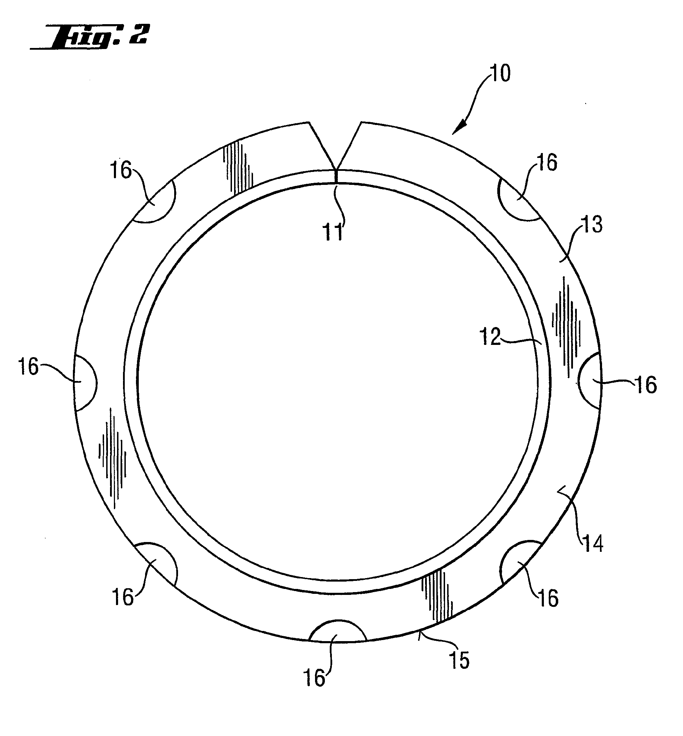

In der Fig. 2 ist die Draufsicht auf eine erfindungsgemäße Bundbuchse 10 dargestellt, die nach dem erfindungsgemäßen Verfahren gefertigt wurde. Diese Bundbuchse 10 besitzt ebenfalls einen zylindrischen Buchsenkörper 12 und einen einzigen Bund 13, der auf der Innenfläche 14 des Bundes 13 in Umfangsrichtung an mehreren äquidistanten Stellen materialverdrängende Vertiefungen 16 aufweist. In der hier gezeigten Ausführungsform der Fig. 2 sind die materialverdrängenden Vertiefungen halbkreisförmig ausgebildet, so daß sich die Vertiefungen in radialer Richtung von innen nach außen verbreitern. Die Vertiefungen sind derart angebracht, daß sie sich bis in den Außenrand 15 des Bundes 13 erstrecken. Die Bundbuchse 10 zeigt eine geschlossene Stoßfuge 11.

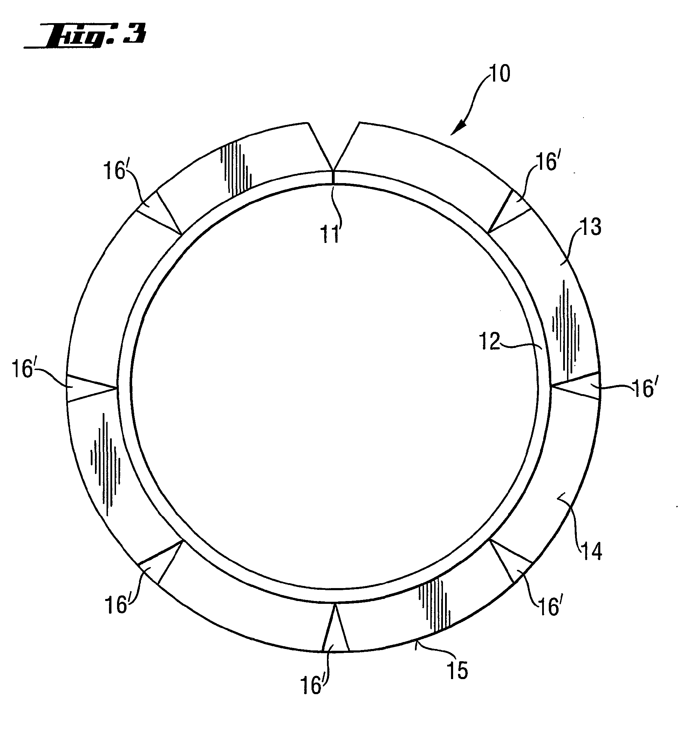

In der Fig. 3 ist die Draufsicht auf eine Bundbuchse 10 gemäß einer weiteren Ausführungsform dargestellt. Im Gegensatz zur Fig. 2 sind die materialverdrängenden Vertiefungen 16' keilförmig ausgebildet und erstrecken sich über die gesamte Breite des Bundes. Die keilförmige oder V-förmige Ausgestaltung der Vertiefungen 16' zeigt ebenfalls eine Verbreiterung der Vertiefungen in radialer Richtung von innen nach außen.

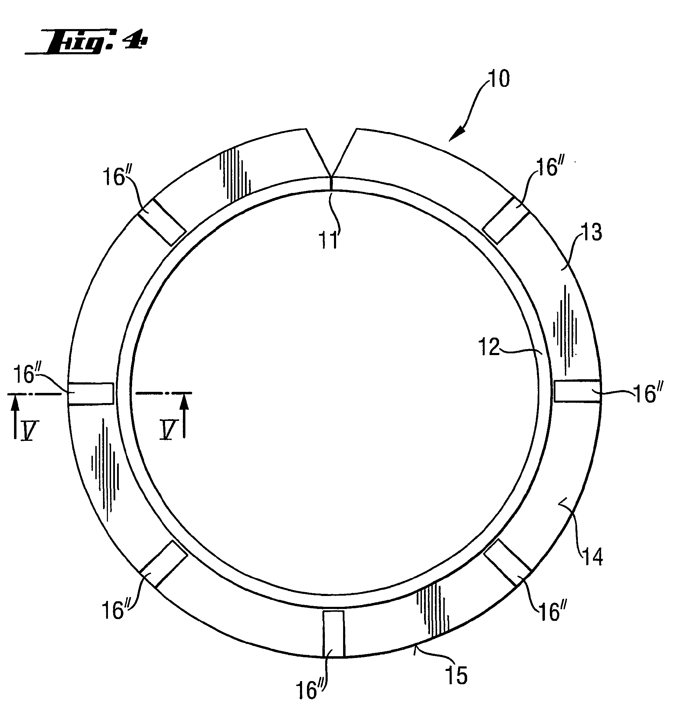

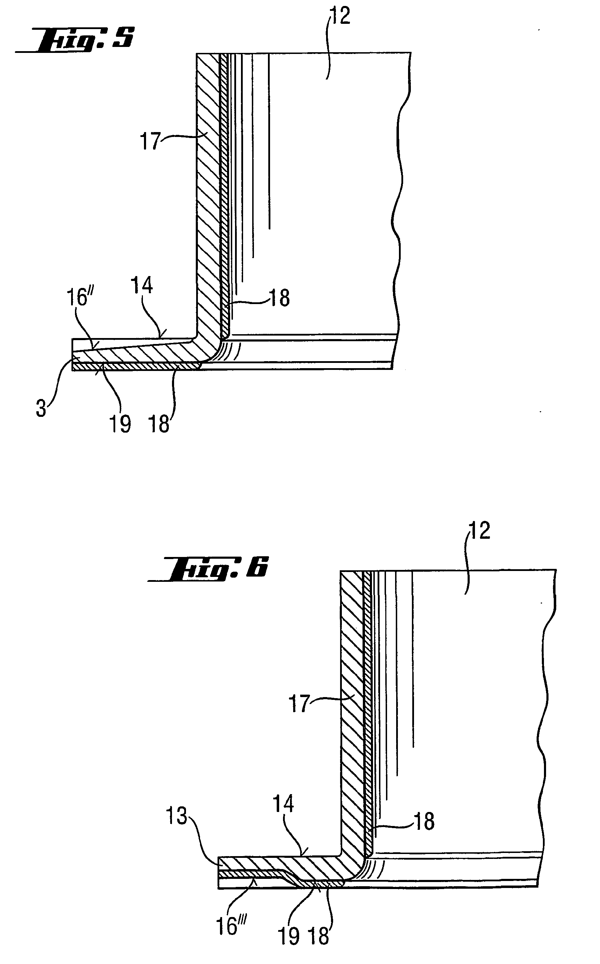

In der Fig. 4 ist eine weitere Ausführungsform einer Bundbuchse 10 dargestellt, wobei die äquidistant angeordneten materialverdrängenden Vertiefungen 16" in Draufsicht rechteckig ausgestaltet sind. Diese materialverdrängenden Vertiefungen 16" besitzen die Besonderheit, daß die Tiefe der Vertiefungen in radialer Richtung von innen nach außen zunimmt. Dies ist in der Fig. 5 zu sehen, die einen Schnitt längs der Linie V-V der in Fig. 4 gezeigten Bundbuchse zeigt. Die in Fig. 5 gezeigte Bundbuchse besitzt ein metallisches Trägermaterial 17 und eine Gleitbeschichtung 18, die auf der Außenfläche 19 der Bundbuchse aufgebracht ist. Die Vertiefungen 16" sind an der Innenfläche 14 des Bundes 13 eingebracht, so daß die Gleitbeschichtung 18 nicht beeinträchtigt wird.

In der Fig. 6 ist eine weitere Ausführungsform einer Bundbuchse im Schnitt dargestellt. Es handelt sich ebenfalls um eine zweischichtige Bundbuchse, wobei allerdings die Vertiefungen 16'" in die Außenfläche 19 des Bundes 13 eingebracht sind. Die Vertiefungen erstrecken sich soweit in das Bundmaterial, daß die Materialverdrängung im metallischen Trägermaterial 17 wirksam wird.

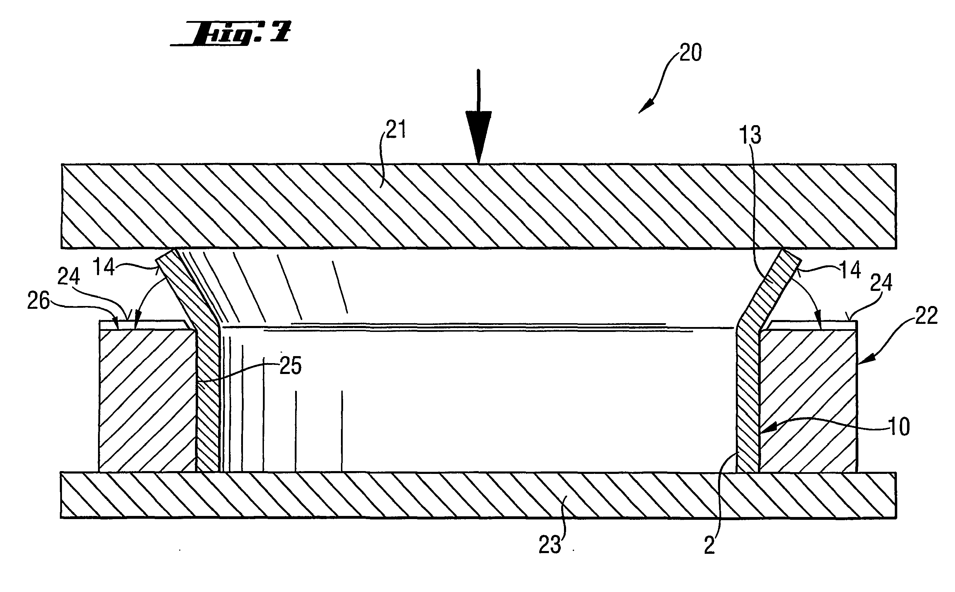

In der Fig. 7 ist eine Umformvorrichtung 20 im Vertikalschnitt dargestellt, die im wesentlichen aus einer oberen Druckplatte 21, einem Biegewerkzeug 22 und einer unteren Druckplatte 23 besteht. Anstelle einer unteren Druckplatte 23 kann das Biegewerkzeug 22 auch eine Schulter im Innern der Buchsenaufnahme 25 aufweisen, auf der die untere Stirnfläche der Buchse aufliegt. In einem ersten Verfahrensschritt kann der Bund 3 in der hier gezeigten Weise bereits vorgebogen sein, so daß mit der Druckplatte 21 lediglich noch ein Nachbiegen durchgeführt wird. Hierbei wird der Bund 13 in Pfeilrichtung umgebogen, so daß die Innenfläche 14 auf die auf der Stirnfläche 26 des Biegewerkzeugs 22 angeordneten Erhöhungen 24 gedrückt wird, wodurch die materialverdrängenden Vertiefungen ausgebildet werden.

In der hier gezeigten Ausführungsform sind die Erhöhungen 24 stegförmig ausgebildet und erstrecken sich in radialer Richtung über die gesamte Breite der Stirnfläche 26 des Biegewerkzeugs 22. Es ist dadurch möglich, Bundbuchsen mit unterschiedlich breitem Bund 13 mit den erfindungsgemäßen materialverdrängenden Vertiefungen zu versehen, ohne daß das Biegewerkzeug 22 ausgetauscht oder umgerüstet werden muß. Die breiten Pfeile geben die Druckrichtung an, wenn die Umformvorrichtung 20 beispielsweise in einer Presse angeordnet wird.

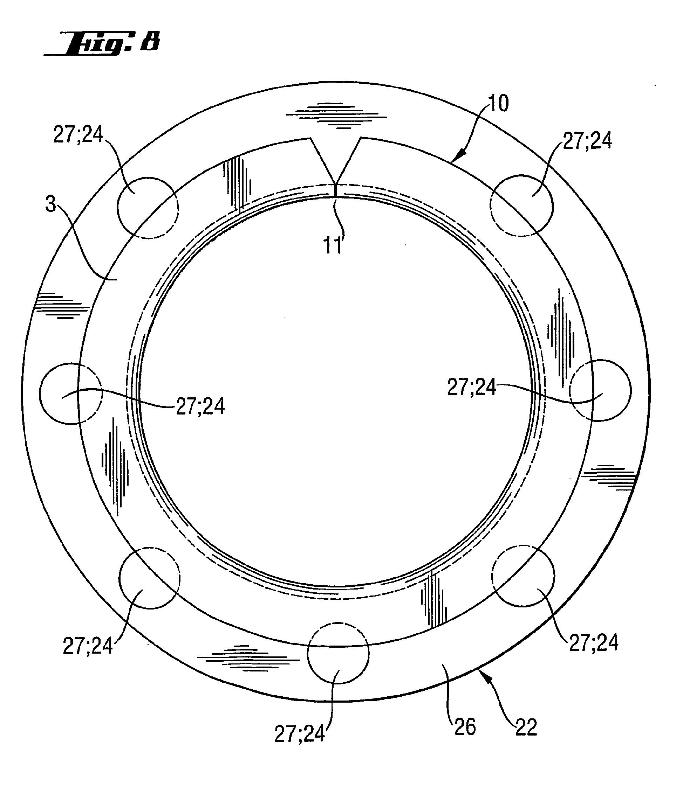

In der Fig. 8 ist die Draufsicht auf ein Biegewerkzeug 22 mit bereits umgeformter Bundbuchse 10 dargestellt. Die Erhöhungen 24 werden bei diesem Biegewerkzeug durch in die Stirnfläche 26 eingesetzte Stifte 27 gebildet. Dieses Werkzeug kann beispielsweise zur Herstellung der in der Fig. 2 gezeigten Bundbuchse verwendet werden.

### Bezugszeichen

- 1: Bundbuchse
- 2: zylindrischer Buchsenkörper
- 3: Bund
- 4: Stoßöffnung
- 10: Bundbuchse
- 11: Stoßfuge
- 12: zylindrischer Buchsenkörper
- 13: Bund
- 14: Innenfläche
- 15: Außenrand des Bundes
- 16,16',16",16''': materialverdrängende Vertiefung
- 17: metallische Trägerschicht
- 18: Kunststoffgleitschicht
- 19: Außenfläche
- 20: Biegevorrichtung
- 21: obere Druckplatte
- 22: Biegewerkzeug
- 23: untere Druckplatte
- 24: Erhöhung
- 25: Buchsenaufnahme
- 26: Stirnfläche
- 27: Stift

## Patentansprüche

1. Bundbuchse für Gleitlager mit einer Stoßfuge und mit mindestens einem angeformten Bund, wobei die Bundbuchse mindestens eine metallische Schicht aufweist, **dadurch gekennzeichnet,**
**dass** der Bund (13) an mindestens zwei in Umfansgrichtung über den Bund (13) verteilten Stellen wenigstens in der metallischen Schicht (17) materialverdrängende Vertiefungen (16,16',16",16"') zur Streckung des Bundes in Umfangsrichtung aufweist.

2. Bundbuchse nach Anspruch 1, **dadurch gekennzeichnet, daß** die Vertiefungen (16,16',16",16"') Einprägungen sind.

3. Bundbuchse nach einem der Ansprüche 1 oder 2, **dadurch gekennzeichnet, daß** sich die Vertiefungen (16,16',16",16"') an der Innenfläche (14) und/oder an der Außenfläche (19) des Bundes (13) befinden.

4. Bundbuchse nach einem der Ansprüche 1 bis 3, **dadurch gekennzeichnet, daß** die Vertiefungen (16,16',16",16"') sich bis in den Außenrand (15) des Bundes (13) erstrecken.

5. Bundbuchse nach einem der Ansprüche 1 bis 4, **dadurch gekennzeichnet, daß** sich die Vertiefungen (16,16',16",16"') in radialer Richtung von innen nach außen verbreitern.

6. Bundbuchse nach einem der Ansprüche 1 bis 5, **dadurch gekennzeichnet, daß** die Vertiefungen (16,16',16",16"') eine Halbkreis- oder Keilform aufweisen.

7. Bundbuchse nach einem der Ansprüche 1 bis 6, **dadurch gekennzeichnet, daß** die Tiefe der Vertiefungen (16,16',16",16"') in radialer Richtung von innen nach außen zunimmt.

8. Bundbuchse nach einem der Ansprüche 1 bis 7, **dadurch gekennzeichnet, daß** sich die Vertiefungen (16,16',16',16"') in radialer Richtung über die gesamte Breite des Bundes (13) erstrecken.

9. Verfahren zur Herstellung von Bundbuchsen für Gleitlager, mit mindestens einem Bund, bei dem aus einem vorgefertigten, mindestens eine metallische Schicht aufweisenden Bandabschnitt mittels Umformverfahren, insbesondere Rollen, eine Buchse mit einer Stoßfuge gefertigt wird, deren Rand zum Bund umgebogen wird,
**dadurch gekennzeichnet,**
**daß** an mindestens zwei in Umfangsrichtung über den Bund verteilten Stellen materialverdrängende Vertiefungen zur Streckung des Bundes in Umfangsrichtung wenigstens in der Metallschicht eingebracht werden.

10. Verfahren nach Anspruch 9, **dadurch gekennzeichnet, daß** die Vertiefungen durch Prägen erzeugt werden.

11. Verfahren nach einem der Ansprüche 9 oder 10, **dadurch gekennzeichnet, daß** die Vertiefungen in die Innen- und/oder Außenfläche des Bundes eingebracht werden.

12. Verfahren nach einem der Ansprüche 9 bis 11, **dadurch gekennzeichnet, daß** die Vertiefungen beim Umbiegen des Buchsenrandes erzeugt werden.

13. Umformvorrichtung zur Herstellung von einem oder zwei Bunden an einer Buchse mit einem Biegewerkzeug, einer Buchsenaufnahme im Biegewerkzeug und einer Druckplatte, wobei mindestens eine der die Buchsenaufnahme umgebenden Stirnflächen des Biegewerkzeugs eine Anlagefläche für den Bund bildet, **dadurch gekennzeichnet,**
**dass** die Umformvorrichtung (20) eine untere Druckplatte (23) oder eine Schulter aufweist, an der das dem Bund (13) gegenüberliegende andere stirnseitige Ende der Buchse in axialer Richtung anlegbar ist, und
**dass** die die Anlagefläche für den Bund bildende Stirnfläche (26) des Biegewerkzeugs (22) und/oder die dem Bund (13) zugewandte Fläche der Druckplatte (21) an mindestens zwei über den Umfang verteilten Stellen Erhöhungen (24) aufweisen, wobei die unprofilierten, glatt ausgebildeten Bereiche auf der Stirnfläche (26) des Biegewerkzeugs (22) oder auf der dem Bund (13) zugewandten Fläche der Druckplatte (21) gegenüberliegen, so dass bei Betätigung der Umformvorrichtung (20) materialverdrängende Vertiefungen am Bund zur Streckung des Bundes in Umfangsrichtung ausgebildet werden.

14. Umformvorrichtung nach Anspruch 13, **dadurch gekennzeichnet, daß** die Erhöhungen (24) in Umfangsrichtung äquidistant angeordnet sind.

15. Umformvorrichtung nach Anspruch 13 oder 14, **dadurch gekennzeichnet, daß** die Erhöhungen (24) eine kreisförmige, ovale oder keilförmige Kontur besitzen.

16. Umformvorrichtung nach einem der Ansprüche 13 bis 15, **dadurch gekennzeichnet, daß** die Erhöhungen (24) sich in radialer Richtung erstreckende Stege sind.

17. Umformvorrichtung nach einem der Ansprüche 13 bis 16, **dadurch gekennzeichnet, daß** die Erhöhungen (24) an die Stirnfläche (26) angeformt sind.

18. Umformvorrichtung nach einem der Ansprüche 13 bis 16, **dadurch gekennzeichnet, daß** gegenüber der Stirnfläche (26) vorstehende Prägestempel in dic Stirnfläche (26) eingesetzt sind.

19. Umformvorrichtung nach Anspruch 18, **dadurch gekennzeichnet, daß** die Prägestempel Stifte (27) sind.

## Claims

1. Flanged sleeve for plain bearings having a butt joint and having at least one flange formed thereon, the flanged sleeve having at least one metal layer, **characterised in that**
the flange (13) has, at least in the metal layer (17), in at least two locations distributed over the flange (13) in the circumferential direction, material-displacing recesses (16, 16', 16", 16"') for extending the flange in the circumferential direction.

2. Flanged sleeve according to claim 1, **characterised in that** the recesses (16, 16', 16", 16"') are impressions.

3. Flanged sleeve according to either claim 1 or claim 2, **characterised in that** the recesses (16, 16', 16", 16"') are located on the inside surface (14) and/or on the outside surface (19) of the flange (13).

4. Flanged sleeve according to any one of claims 1 to 3, **characterised in that** the recesses (16, 16', 16", 16"') extend into the outside edge (15) of the flange (13).

5. Flanged sleeve according to any one of claims 1 to 4, **characterised in that** the recesses (16, 16', 16", 16"') widen from the inside to the outside in the radial direction.

6. Flanged sleeve according to any one of claims 1 to 5, **characterised in that** the recesses (16, 16', 16", 16"') are semicircular or wedge-shaped.

7. Flanged sleeve according to any one of claims 1 to 6, **characterised in that** the depth of the recesses (16, 16', 16", 16"') increases from the inside to the outside in the radial direction.

8. Flanged sleeve according to any one of claims 1 to 7, **characterised in that** the recesses (16, 16', 16", 16"') extend over the entire width of the flange (13) in the radial direction.

9. Method for the production of flanged sleeves for plain bearings, having at least one flange, in which there is manufactured from a prefabricated strip section having at least one metal layer, by means of a forming process, especially rolling, a sleeve having a butt joint, the edge of which is bent to form the flange,
**characterised in that**
material-displacing recesses for extending the flange in the circumferential direction are introduced at least into the metal layer in at least two locations distributed over the flange in the circumferential direction.

10. Method according to claim 9, **characterised in that** the recesses are produced by impression.

11. Method according to either claim 9 or claim 10, **characterised in that** the recesses are introduced into the inside and/or outside surface of the flange.

12. Method according to any one of claims 9 to 11, **characterised in that** the recesses are produced when the flange edge is bent.

13. Forming device for the production of one or two flanges on a sleeve, having a bending tool, a sleeve receiver in the bending tool and a pressure plate, at least one of the end faces of the bending tool that surrounds the sleeve receiver forming a bearing surface for the flange, **characterised in that**
the forming device (20) has a lower pressure plate (23) or shoulder on which the other end of the sleeve opposite the flange (13) can rest in the axial direction, and
**in that** the end face (26) of the bending tool (22) forming the bearing surface for the flange, and/or the face of the pressure plate (21) facing the flange (13), has raised portions (24) in at least two locations distributed over the circumference, wherein the non-profiled, smooth regions on the end face (26) of the bending tool (22) or on the face of the pressure plate (21) facing the flange (13) are opposite one another so that, when the forming device (20) is operated, material-displacing recesses are formed on the flange for extending the flange in the circumferential direction.

14. Forming device according to claim 13, **characterised in that** the raised portions (24) are arranged equidistantly in the circumferential direction.

15. Forming device according to claim 13 or 14, **characterised in that** the raised portions (24) have a circular, oval or wedge-shaped contour.

16. Forming device according to any one of claims 13 to 15, **characterised in that** the raised portions (24) are webs that extend in the radial direction.

17. Forming device according to any one of claims 13 to 16, **characterised in that** the raised portions (24) are formed on the end face (26).

18. Forming device according to any one of claims 13 to 16, **characterised in that** impressing dies that project relative to the end face (26) are set into the end face (26).

19. Forming device according to claim 18, **characterised in that** the impressing dies are pins (27).

## Revendications

1. Douille à collerette pour palier à glissement avec un joint d'about et avec au moins une collerette formée d'un seul tenant, la douille à collerette comprenant au moins une couche métallique,
**caractérisée en ce que**,
la collerette (13) présente, en au moins deux emplacements répartis selon la périphérie de la collerette (13), au moins dans la couche métallique (17), des renfoncements (16, 16', 16", 16"') obtenus par refoulement de matériau, pour l'étirement de la collerette dans la direction périphérique.

2. Douille à collerette selon la revendication 1, **caractérisée en ce que** les renfoncements (16, 16', 16", 16"') sont des empreintes.

3. Douille à collerette selon la revendication 1 ou 2, **caractérisée en ce que** les renfoncements (16, 16', 16", 16"') se trouvent sur la face intérieure (14) et/ou sur la face extérieure (19) de la collerette (13).

4. Douille à collerette selon l'une des revendications 1 à 3, **caractérisée en ce que** les renfoncements (16, 16', 16", 16"') s'étendent jusque dans lé bord extérieur (15) de la collerette (13).

5. Douille à collerette selon l'une des revendications 1 à 4, **caractérisée en ce que** les renfoncements (16, 16', 16", 16'") vont en s'élargissant de l'intérieur vers l'extérieur, en direction radiale.

6. Douille à collerette selon l'une des revendications 1 à 5, **caractérisée en ce que** les renfoncements (16, 16', 16", 16"') présentent une forme en demi-cercle ou en coin.

7. Douille à collerette selon l'une des revendications 1 à 6, **caractérisée en ce que** la profondeur des renfoncements (16, 16', 16", 16"') va en augmentant de l'intérieur vers l'extérieur, en direction radiale.

8. Douille à collerette selon l'une des revendications 1 à 7, **caractérisée en ce que** les renfoncements (16, 16', 16", 16"') s'étendent sur toute la largeur de la collerette (13), en direction radiale.

9. Procédé de fabrication de douilles à collerette pour des paliers à glissement, avec au moins une collerette, par lequel, à partir d'un tronçon de bande, préfabriqué, présentant au moins une couche métallique, une collerette, avec un joint d'about, dont le bord est replié vers la collerette, est fabriquée par un procédé de formage, en particulier avec des galets, **caractérisé en ce que**, en au moins deux emplacements répartis en direction périphérique sur la collerette sont ménagés des renfoncements produits par refoulement de métal, pour l'étirement de la collerette dans la direction périphérique au moins dans la couche métallique.

10. Procédé selon la revendication 9, **caractérisé en ce que** les renfoncements sont produits par formage tridimensionnel.

11. Procédé selon l'une des revendications 9 ou 10, **caractérisé en ce que** les renfoncements sont ménagés dans la face intérieure et/ou extérieure de la collerette.

12. Procédé selon l'une des revendications 9 à 11, **caractérisé en ce que** les renfoncements sont produits lors du repli du bord de collerette.

13. Dispositif de formage pour la fabrication de une ou deux collerettes sur une douille avec un outil de cintrage, un logement à douilles dans l'outil de cintrage et une plaque de pressage, dans lequel au moins une des faces frontales, entourant le logement à douilles, de l'outil de cintrage forme une face d'appui pour la collerette, **caractérisé en ce que**,
le dispositif de formage (20) présente une plaque de pressage inférieure (23) ou un épaulement, sur laquelle ou lequel l'autre extrémité frontale, opposée à la collerette (13), de la douille est susceptible d'être appliquée en direction axiale, et
**en ce que** la face frontale (26), formant la face d'appui pour la collerette, de l'outil de cintrage (22) et/ou la face, tournée vers la collerette (13), de la plaque de pressage (21) présente(nt), en au moins deux emplacements répartis sur la périphérie, des bossages (24), les zones lisses non profilées, sur la face frontale (26) de l'outil de cintrage (22) ou sur la face, tournée vers la collerette (13), de la plaque de pressage (21) étant placées à l'opposé, de manière que, lors de l'actionnement du dispositif de formage (20), des renfoncements produits par refoulement de matériau soient réalisés sur la collerette, pour l'étirement de la collerette dans la direction périphérique.

14. Dispositif de formage selon la revendication 13, **caractérisé en ce que** les bossages (24) sont disposés de façon équidistante en direction périphérique.

15. Dispositif de formage selon la revendication 13 ou 14, **caractérisé en ce que** les bossages (24) présentent un contour en forme de cercle, d'ovale ou en forme de coin.

16. Dispositif de formage selon l'une des revendications 13 à 15, **caractérisé en ce que** les bossages (24) sont des nervures s'étendant en direction radiale.

17. Dispositif de formage selon l'une des revendications 13 à 16, **caractérisé en ce que** les bossages (24) sont formés d'un seul tenant sur la face frontale (26).

18. Dispositif de formage selon l'une des revendications 13 à 16, **caractérisé en ce que** des poinçons de façonnage tridimensionnel, faisant saillie par rapport à la face frontale (26), sont insérés dans la face frontale (26).

19. Dispositif de formage selon la revendication 18, **caractérisé en ce que** les poinçons de formage tridimensionnels sont des ergots (27).
